# EUROPEAN PATENT APPLICATION

(11) **EP 4 831 143 A1**
(43) Date of publication of application: **28.10.2026**
(21) Application number: 24905135.0
(22) Date of filing: 06.12.2024
(51) Int. Cl.: C04B 35/44, C04B 35/505, C04B 37/00, H01S 3/06, H01S 3/16

(54) **YAG SINTERED BODY AND METHOD FOR PRODUCING YAG SINTERED BODY**

(30) Priority: 18.12.2023 JP 2023213274
(71) Applicant: JX Advanced Metals Corporation, Tokyo 105-8417 (JP)
(72) Inventor: NAKAZAKI, Masato, Kitaibaraki-shi, Ibaraki 319-1535 (JP); TSUNODA, Akihiro, Kitaibaraki-shi, Ibaraki 319-1535 (JP); TAGO, Masahiro, Kitaibaraki-shi, Ibaraki 319-1535 (JP); YOSHINARI, Kazunori, Kitaibaraki-shi, Ibaraki 319-1535 (JP)
(74) Representative: Forresters IP LLP
(86) International application number: PCT/JP2024/043318
(87) International publication number: WO 2025/134824

(57) **Abstract**

Provided are a YAG sintered body capable of achieving relatively low reflectance and/or uniform mechanical strength at a bonding interface between a first sintered part and a second sintered part, and a method for producing the YAG sintered body. A YAG sintered body including a portion in which a part of Y₃Al₅O₁₂ crystals is replaced by a dopant, comprising a first sintered part and a second sintered part bonded to each other, wherein the first sintered part contains a dopant not contained in the second sintered part, and on a surface of the YAG sintered body, an average diffusion distance of at least one kind of the dopant contained in the first sintered part into the second sintered part in a direction orthogonal to a bonding interface between the first sintered part and the second sintered part is longer than 0.010 mm.

## Description

### [Technical Field]

This specification discloses a YAG sintered body and a method for producing a YAG sintered body.

### [Background Art]

A garnet-structure crystal composed of a composite oxide of yttrium and aluminum (Y₃Al₅O₁₂) is generally called YAG, and is used as a gain medium or the like of a solid-state laser for industrial, research, or medical use.

When a gain medium is irradiated with excitation light, active atoms that have absorbed the excitation light to enter an excited state emit energy when returning to a ground state, whereby spontaneous emission and stimulated emission occur. At this time, light is amplified by the stimulated emission, and light with high purity is emitted as laser light.

YAG used for the gain medium can be produced by sintering a raw material powder containing yttrium oxide powder and aluminum oxide powder. Here, if necessary, the material may be doped with active atoms such as neodymium, ytterbium, or other rare earth elements. In this case, the YAG sintered body becomes one in which a part of yttrium or aluminum in the crystal is substituted by the dopant (Nd:YAG, Yb:YAG, etc.), and a light amplification effect at a wavelength or the like corresponding to the type of dopant can be obtained.

As a related technology, for example, Patent Document 1 describes "a YAG ceramic in which a proportion of GOS (Grain Orientation Spread) from 0° to 1° is 60% or more." Patent Document 2 describes "a Yb:YAG ceramic material comprising a composite oxide of yttrium and aluminum doped with Yb, characterized by containing 100 atppm or more and 200 atppm or less of Si, and 500 atppm or more and 1000 atppm or less of La and/or Gd as additive elements."

### [Prior Art Documents]

### [Patent Documents]

[Patent Document 1] Japanese Unexamined Patent Application Publication No. 2020-158329
[Patent Document 2] Japanese Unexamined Patent Application Publication No. 2022-96133

### [Summary of the Invention]

### [Problems to be Solved by the Invention]

Incidentally, as the above-described gain medium, a YAG sintered body in which a first sintered part and a second sintered part differing in the presence, absence, or type of dopant are bonded to each other is sometimes used. In such a YAG sintered body, in order to achieve a large optical gain, it is desired to lower the light reflectance at the bonding interface as much as possible so that substantially no reflected light is generated at the bonding interface between the first sintered part and the second sintered part. In addition, the mechanical strength of the bonding interface between the first sintered part and the second sintered part may be required to be uniform. A bonding interface with non-uniform mechanical strength may become a starting point of cracking or the like when an external force acts thereon.

This specification provides a YAG sintered body capable of achieving relatively low reflectance and/or uniform mechanical strength at a bonding interface between a first sintered part and a second sintered part, and a method for producing the YAG sintered body.

### [Means for Solving the Problems]

The YAG sintered body disclosed in this specification is a YAG sintered body including a portion in which a part of Y₃Al₅O₁₂ crystals is replaced by a dopant, comprising a first sintered part and a second sintered part bonded to each other, wherein the first sintered part contains a dopant not contained in the second sintered part, and on a surface of the YAG sintered body, an average diffusion distance of at least one kind of dopant contained in the first sintered part into the second sintered part in a direction orthogonal to a bonding interface between the first sintered part and the second sintered part is longer than 0.010 mm.

The method for producing a YAG sintered body disclosed in this specification is a method for producing a YAG sintered body including a portion in which a part of Y₃Al₅O₁₂ crystals is replaced by a dopant, the YAG sintered body having a first sintered part and a second sintered part bonded to each other, the first sintered part containing a dopant not contained in the second sintered part, the method comprising: a raw material preparation step of preparing a first powder and a second powder respectively containing an yttrium oxide powder and an aluminum oxide powder as raw material powders, wherein the first powder contains a dopant oxide powder not contained in the second powder; a molding step of molding the first powder and the second powder by pressing them in a state where they are arranged in contact with each other at an interface, to obtain a molded body having a first molded part of the first powder and a second molded part of the second powder bonded to each other; and a sintering step of heating and sintering the molded body.

### [Effect of the Invention]

According to the YAG sintered body and the method for producing a YAG sintered body described above, it is possible to achieve a relatively low reflectance and/or a uniform mechanical strength at the bonding interface between the first sintered part and the second sintered part.

### [Brief Description of the Drawings]

[Fig. 1]

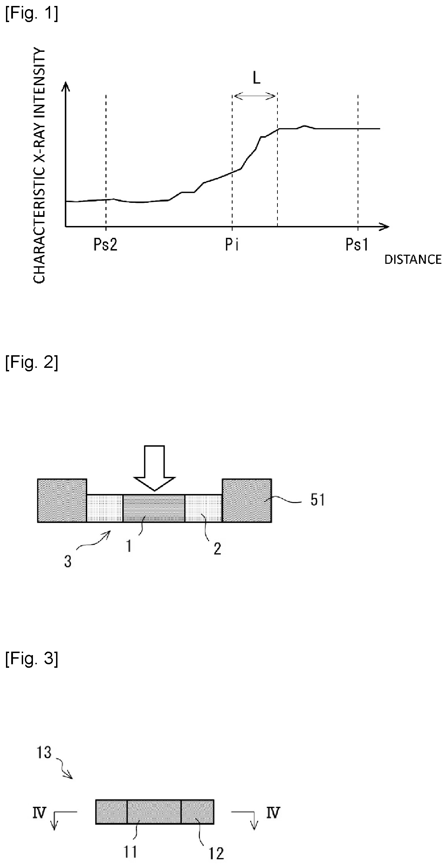

   Fig. 1 is a graph showing an example of a change in characteristic X-ray intensity (element intensity) of an arbitrary element along a direction orthogonal to a bonding interface between a first sintered part and a second sintered part by EPMA line analysis.
[Fig. 2]
   Fig. 2 is a cross-sectional view taken along an axial direction, schematically showing a state of molding a first powder and a second powder to produce a molded body having a first molded part and a second molded part bonded to each other.
[Fig. 3]
   Fig. 3 is a cross-sectional view taken along the axial direction showing a YAG sintered body having a first sintered part and a second sintered part obtained by heating the molded body of Fig. 2.
[Fig. 4]

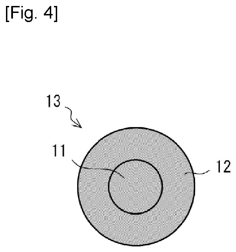

   Fig. 4 is a cross-sectional view taken along line IV-IV in Fig. 3.
[Fig. 5]

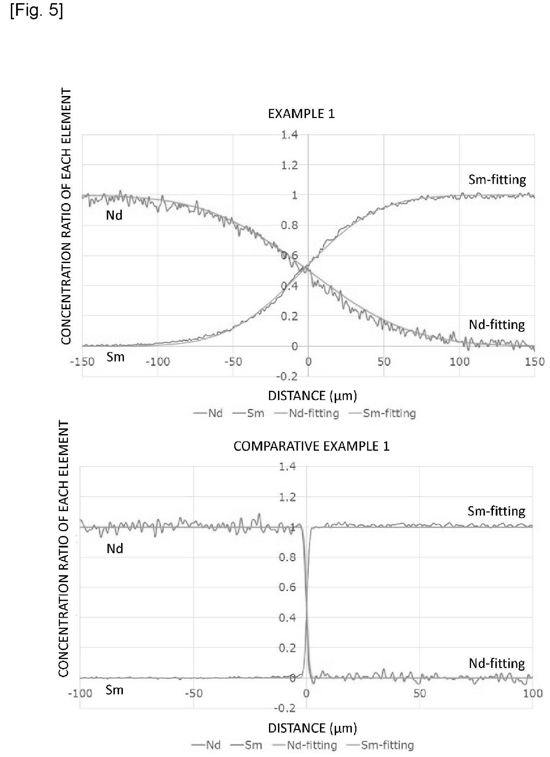

   Fig. 5 is a graph showing the results of line analysis of the YAG sintered bodies of Example 1 and Comparative Example 1.
[Fig. 6]

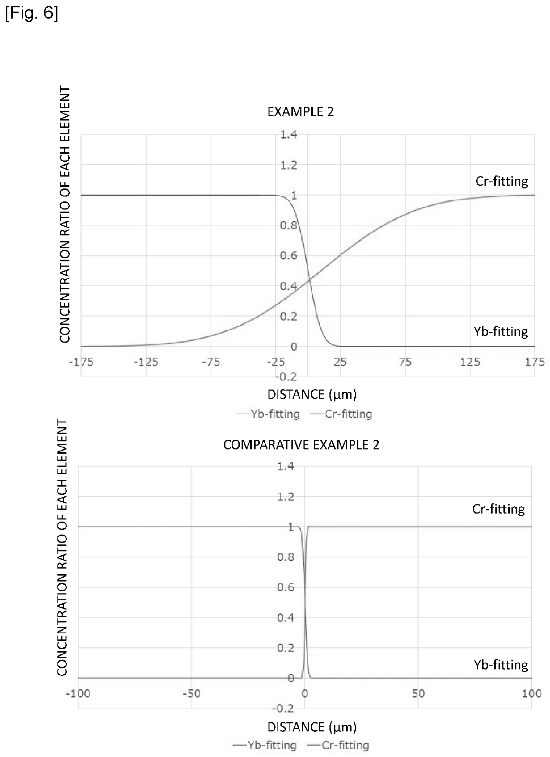

   Fig. 6 is a graph showing the results of line analysis of the YAG sintered bodies of Example 2 and Comparative Example 2.
[Fig. 7]

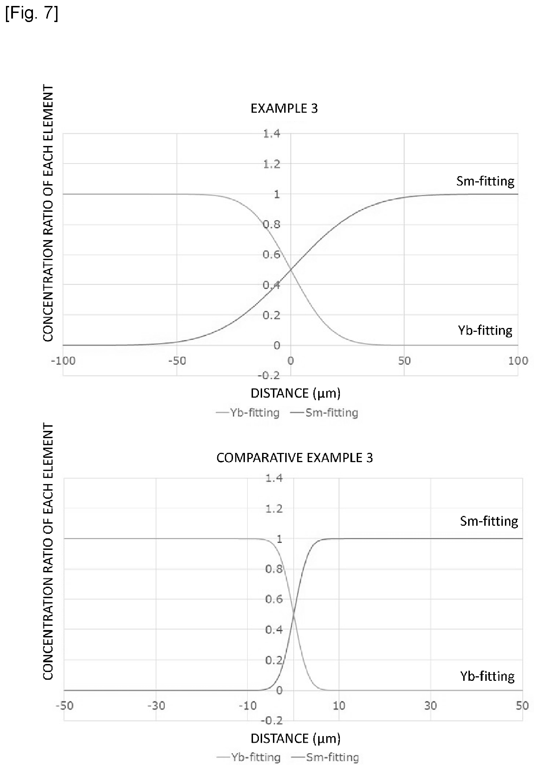

   Fig. 7 is a graph showing the results of line analysis of the YAG sintered bodies of Example 3 and Comparative Example 3.
[Fig. 8]

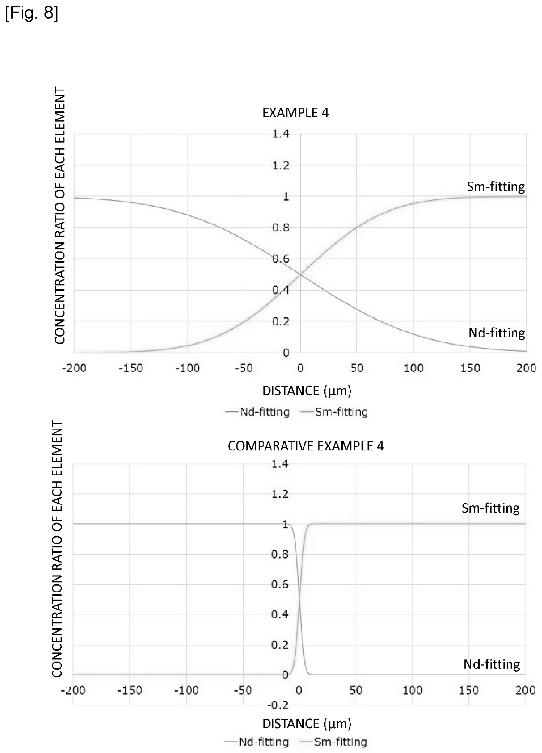

   Fig. 8 is a graph showing the results of line analysis of the YAG sintered bodies of Example 4 and Comparative Example 4.
[Fig. 9]

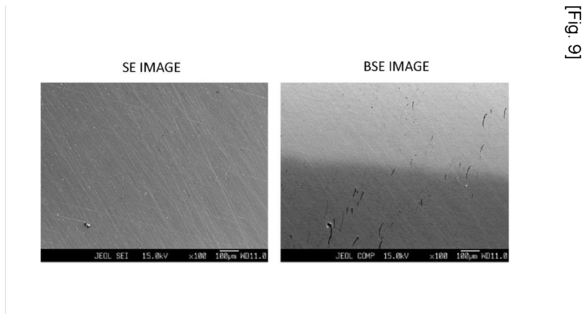

   Fig. 9 shows an SE image and a BSE image of a bonding interface on a surface of the YAG sintered body of Example 1.
[Fig. 10]
   Fig. 10 shows an SE image and a BSE image of a bonding interface on a surface of the YAG sintered body of Comparative Example 1.
[Fig. 11] Fig. 11 is a schematic diagram showing a method for measuring reflectance.
[Fig. 12] Fig. 12 is a plan view of a YAG sintered body of one embodiment, and a schematic cross-sectional view taken along line b-b thereof.
[Fig. 13] Fig. 13 is a graph showing the results of line analysis of the YAG sintered body of Example 5.
[Fig. 14] Fig. 14 is a graph showing the results of line analysis of the YAG sintered body of Example 6.
[Fig. 15] Fig. 15 is a graph showing the results of line analysis of the YAG sintered body of Example 7.

### [Detailed Description of the Invention]

Hereinafter, embodiments of the above-described YAG sintered body and method for producing a YAG sintered body will be described in detail.

A YAG sintered body according to one embodiment contains Y₃Al₅O₁₂ and includes a portion in which a part of Y₃Al₅O₁₂ crystals is replaced by a dopant. This YAG sintered body has a first sintered part and a second sintered part bonded to each other, and the first sintered part contains a dopant not contained in the second sintered part. That is, the first sintered part and the second sintered part differ from each other in the presence or absence and/or the type of dopants.

In the YAG sintered body described above, on its surface, an average diffusion distance of at least one kind of dopant contained in the first sintered part into the second sintered part in a direction orthogonal to the bonding interface between the first sintered part and the second sintered part (hereinafter also referred to as an "interface orthogonal direction") is longer than 0.010 mm. Such a YAG sintered body having a long average diffusion distance can be easily obtained, for example, by employing powder sintering bonding more than at diffusion bonding during its production, as will be described later, which effectively suppresses parasitic oscillation. Note that parasitic oscillation refers to a phenomenon in which, when the excitation energy density inside a laser medium becomes high, laser oscillation occurs inside the medium in a direction different from the direction in which laser light is originally intended to be extracted. Parasitic oscillation can be suppressed by bonding a medium that absorbs laser light to the outside of the laser medium, and the smaller the reflection at their interface, the higher the parasitic oscillation suppressing effect. While the refractive index of light at the bonding interface between the first sintered part and the second sintered part changes depending on the dopant species and its concentration, if the dopant contained in the first sintered part diffuses into the second sintered part over a distance longer than 0.010 mm, the amount of change in the refractive index becomes small. On the other hand, in Fresnel reflection, a larger refractive index difference results in a higher reflectance. Therefore, it is expected that reducing the refractive index difference will reduce the Fresnel reflection. As a result, parasitic oscillation may be efficiently suppressed, and the optical gain of the laser may be increased. In addition, when the average diffusion distance of at least one kind of dopant contained in the first sintered part into the second sintered part is longer than 0.010 mm, the mechanical strength of their bonding interface becomes uniform.

Manufacturing such a YAG sintered body can include, for example, performing a raw material preparation step, a molding step, and a sintering step in this order. In the raw material preparation step, a first powder corresponding to a desired composition of the first sintered part and a second powder corresponding to a desired composition of the second sintered part are prepared respectively. Here, it is important to obtain a molded body having a first molded part and a second molded part respectively corresponding thereto by pressing the first powder and the second powder in a state of being arranged in contact with each other at an interface in the molding step. Thereafter, by heating the molded body in the sintering step, the first molded part and the second molded part are bonded to become the first sintered part and the second sintered part. By molding the first powder and the second powder in contact with each other in the above molding step and sintering them in the sintering step, the first powder and the second powder overlap each other before sintering, and mixing of the dopant of either the first powder or the second powder into the other increases the average diffusion distance of the dopant. Note that parameters for the average diffusion distance of the dopant include temperature, time, initial concentration gradient, and the like.

### (YAG sintered body)

The YAG sintered body is a polycrystalline YAG ceramic mainly comprising garnet-structure crystals composed of a composite oxide of Y (yttrium) and Al (aluminum) (Y₃Al₅O₁₂). This YAG sintered body has a first sintered part and a second sintered part bonded to each other.

The YAG sintered body includes a portion where a part of Y₃Al₅O₁₂ crystals is replaced with a dopant serving as active atoms in applications as a gain medium. More specifically, out of the first sintered part and the second sintered part included in the YAG sintered body, the first sintered part contains one or more kinds of dopants, by which yttrium and/or aluminum constituting a part of the Y₃Al₅O₁₂ crystals is substituted, and the dopants form a solid solution in the crystal in the form of ions.

The second sintered part may not contain a dopant. In this case, since the first sintered part contains a dopant while the second sintered part contains no dopant, the first sintered part and the second sintered part differ in terms of the presence or absence of a dopant. Alternatively, when both the first sintered part and the second sintered part contain dopants, at least one kind of dopant contained in the first sintered part is not contained in the second sintered part. In this case, the first sintered part and the second sintered part differ from each other in at least one kind of dopant.

Specific examples of the above dopants include rare earth elements (that is, at least one element selected from 16 elements consisting of Sc, La, Ce, Pr, Nd, Pm, Sm, Eu, Gd, Tb, Dy, Ho, Er, Tm, Yb, and Lu). The first sintered part may contain such a rare earth element as a dopant.

Among rare earth elements, Nd (neodymium) has a four-level energy system, easily undergoes population inversion, and facilitates laser oscillation. In addition, Yb (ytterbium) has a three-level energy level system and population inversion is less likely to occur, but high-efficiency and high-output laser oscillation becomes possible by high-power excitation. Moreover, since Sm (samarium) does not absorb the excitation light of Nd:YAG but absorbs its oscillation wavelength (1064 nm), it is utilized as an absorption layer for Nd:YAG. When Cr (chromium) is valence-converted to Cr4+, it can absorb the oscillation wavelengths (1064 nm, 1030 nm) of Nd:YAG and Yb:YAG, so it is utilized as an absorption layer for them. Furthermore, since Cr is a saturable absorber, it is utilized as a Q-switch. It is preferable that the first sintered part contains Nd and/or Yb as a dopant, and the second sintered part contains Sm and/or Cr as a dopant or does not have a portion replaced by a dopant. Typically, the first sintered part may contain Nd, and the second sintered part may contain Sm or Cr, or may contain no dopant. Alternatively, the first sintered part may contain Yb, and the second sintered part may contain Cr, or may contain no dopant.

When the YAG sintered body contains Nd, the content of Nd is preferably 0.1 at% to 5 at%. When containing Yb, the content of Yb is preferably 0.1 at% to 15 at%. When containing Sm, the content of Sm is preferably 0.1 at% to 10 at%. When containing Cr, the content of Cr is preferably 0.1 at% to 3 at%. In addition, the YAG sintered body may contain at least one selected from the group consisting of Sc, La, Ce, Pr, Pm, Eu, Gd, Tb, Dy, Ho, Er, Tm, and Lu at or below the solid solution limit. The content of the above elements such as Nd, Yb, Sm, and Cr can be measured by GD-MS (Glow Discharge Mass Spectrometry) or ICP-AES (Inductively Coupled Plasma Atomic Emission Spectrometry). The YAG sintered body may also contain inevitable impurities derived from its production process or the like.

A bonding interface exists between the first sintered part and the second sintered part of the YAG sintered body, although it may be nearly indiscernible by visual inspection or microscopic observation. Here, as described above, the first sintered part contains a dopant not contained in the second sintered part. Therefore, the bonding interface between the first sintered part and the second sintered part can be grasped by checking the change in the content of this dopant, for example, on the surface of the YAG sintered body. This is because, relative to the bonding interface, a large amount of the dopant is contained on the first sintered part side, whereas the dopant is contained in a small amount or almost not contained on the second sintered part side.

In the YAG sintered body of this embodiment, the average diffusion distance of at least one kind of dopant contained in the first sintered part into the second sintered part in the interface orthogonal direction on its surface is longer than 0.010 mm. When the average diffusion distance of the dopant contained in the first sintered part into the second sintered part is 0.010 mm or less, it is suggested that the bonding is insufficient, which leads to large variations in the mechanical strength of the bonded surface and a high reflectance at the bonding interface. From this viewpoint, the average diffusion distance of the dopant contained in the first sintered part is preferably 0.020 mm or more. The average diffusion distance of the dopant contained in the first sintered part may be 0.020 mm to 0.300 mm. If the average diffusion distance of the dopant contained in the first sintered part is too long, there is a concern that the effective diameter will be small when used as a gain medium or the like. For this reason, the average diffusion distance of the dopant contained in the first sintered part is preferably 0.090 mm or less, and more preferably 0.080 mm or less. As will be described later, when a preliminary molding step is performed when producing the YAG sintered body, the diffusion distance of the dopant in the YAG sintered body tends to be kept small to some extent as described above, compared to the case where the first powder and the second powder are molded in their powder states. The average diffusion distance of the dopant contained in the first sintered part is preferably 0.020 mm to 0.080 mm.

The average diffusion distance of the dopant contained in the first sintered part is measured as follows.

Regarding a predetermined element such as a dopant contained in the YAG sintered body, line analysis is performed along the interface orthogonal direction on the surface of the YAG sintered body using an electron probe microanalyzer (EPMA) to confirm changes in elemental intensity along the interface orthogonal direction on both sides across the bonding interface, including the bonding interface. As a result, a graph as illustrated in Fig. 1, in which the horizontal axis is a distance along the interface orthogonal direction and the vertical axis is an elemental intensity (characteristic X-ray intensity), is obtained.

Next, the element intensity in the graph is normalized such that its minimum value becomes 0 and its maximum value becomes 1. The formula: Cn = (Cx - C0) / (C1 - C0) is used for normalization. Here, Cx is the elemental intensity at a certain distance, C1 is the elemental intensity at a reference position Ps1 where the elemental intensity is substantially constant at a position sufficiently away from the bonding interface position Pi to the first sintered part side (right side in Fig. 1) in the interface orthogonal direction, and C0 is the elemental intensity at a reference position Ps2 where the elemental intensity is substantially constant at a position sufficiently away from the bonding interface position Pi to the second sintered part side (left side in Fig. 1) in the interface orthogonal direction. The bonding interface position Pi means a position where the elemental intensity becomes 1/2 of the maximum value. Since elemental intensity is generally proportional to concentration, the vertical axis can be regarded as elemental concentration.

The relationship between the elemental concentration c normalized from 0 to 1 and the average diffusion distance can be described by the following equation (1) including an error function. In the following formula (1), x0 is the bonding interface position Pi, and L is the average diffusion distance. The graph is fitted by the least-squares method based on the following formula (1) to find the average diffusion distance L. Here, the average diffusion distance L that minimizes the sum of squared errors is determined with the average diffusion distance L as a fitting parameter.
[Math 1] $c = \frac{1}{2} erfc \left(\frac{x - {x}_{0}}{L}\right)$ (1)

The average diffusion distance of the dopant contained in the first sintered part is determined by performing the above-described measuring method of the average diffusion distance L for the dopant. For at least one kind of dopant contained in the first sintered part, the average diffusion distance of the dopant into the second sintered part is longer than 0.010 mm.

Incidentally, the YAG sintered body only needs to have a first sintered part and a second sintered part; for example, one or more other sintered parts may be further bonded to the first sintered part and/or the second sintered part. In this case, there are no particular limitations on the bonding mode or average diffusion distance between the first sintered part or second sintered part and the other sintered part.

The shape of the YAG sintered body is appropriately determined according to its use and the like, and may be various three-dimensional shapes such as a solid cylindrical shape, a prismatic shape, or other solid columnar shapes, and a polyhedral shape including a cubic shape or a rectangular parallelepiped shape. For example, in a YAG sintered body forming an overall solid cylindrical shape, as an example, the first sintered part may have a solid cylindrical shape, and the second sintered part may have a hollow cylindrical shape surrounding a periphery of a side surface of the first sintered part and bonded to the side surface of the first sintered part at an inner peripheral surface. In this case, for example, the outer diameter of the hollow cylindrical second sintered part may be 25 mm to 100 mm, the diameter of the solid cylindrical first sintered part may be 10 mm to 60 mm, and the thicknesses of the first sintered part and the second sintered part may be 5 mm to 20 mm. Also, for example, it may be a relatively large one in which the outer diameter of the hollow cylindrical second sintered part is 120 mm to 200 mm and the diameter of the solid cylindrical first sintered part is 110 mm to 190 mm. However, it is not limited to the shapes and dimensions described here.

The YAG sintered body of this embodiment may have high mechanical strength due to, for example, being produced by a method as described later. The bending strength of the YAG sintered body is preferably 310 MPa to 370 MPa, and more preferably 340 MPa to 360 MPa. A YAG sintered body having such a bending strength can be used in a high-load environment. The above bending strength is measured in accordance with JIS R1601 "Testing method for flexural strength (modulus of rupture) of fine ceramics at room temperature".

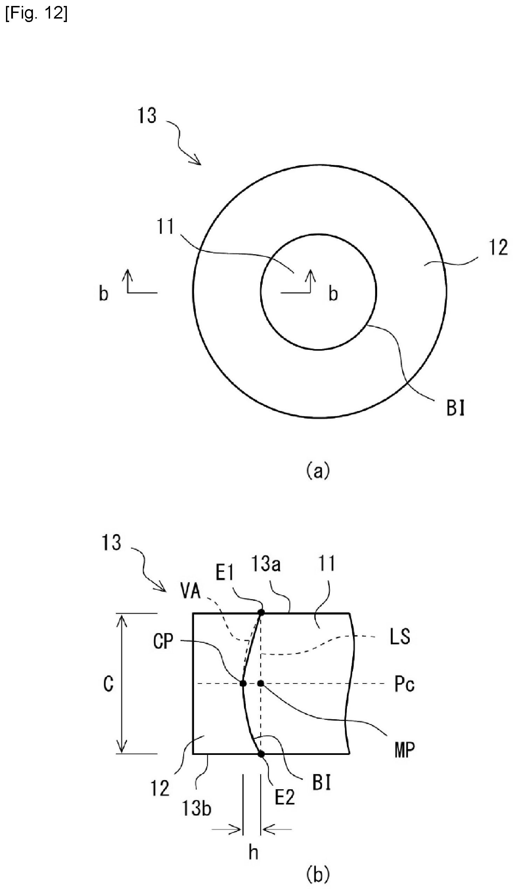

Furthermore, as will be described later, by adjusting the applied pressure in the preliminary molding step and the molding step in the producing method, as shown in Fig. 12, the YAG sintered body 13 may have a shape in which either the first sintered part 11 or the second sintered part 12 (the first sintered part 11 in Fig. 12) bulges to the other side (the second sintered part 12 in Fig. 12).

More specifically, in the illustrated YAG sintered body 13, regarding one surface 13a and the other surface 13b on its back side, on both of which the bonding interface BI is exposed, when cutting in the thickness direction from the one surface 13a to the other surface 13b, a cut surface as shown in Fig. 12(b) is obtained. In the case of the YAG sintered body 13 having the solid cylindrical first sintered part 11 and the hollow cylindrical second sintered part 12 as shown in Fig. 12, the above cut surface is obtained by cutting so as to pass through its central axis. In this cut surface, the bonding interface BI has a shape that bulges toward the first sintered part 11 side or the second sintered part 12 side (the second sintered part 12 side in the illustrated example) at a central portion more than at both end points E1 and E2 in the thickness direction (up-down direction in Fig. 12(b)) of the bonding interface BI.

In this case, in the above cut surface, a ratio (P/C) of a length P of a virtual arc VA (indicated by a broken line in Fig. 12(b)) passing through both end points E1, E2 of the bonding interface and a center point CP on the thickness center position Pc to a straight-line distance C between both end points E1, E2 of the bonding interface BI is preferably 1.0050 or more. The virtual arc VA means an arc between both end points E1 and E2 in a circle centered on the circumcenter of a triangle having the three points of both end points E1, E2 and the center point CP as vertices and circumscribed to the triangle. The ratio (P/C) of the length P of the arc VA to the straight-line distance C may be 1.2000 or less, more preferably 1.0100 to 1.1000, and further preferably 1.0300 to 1.0700. When the ratio (P/C) of the length P of the arc VA to the straight-line distance C is large to some extent, the area of the bonding interface increases, bonding during sintering is promoted to form a strong bonding interface, and the generation of cracks at the bonding interface is suppressed. Multiple cut surfaces can be obtained depending on the cutting location of the YAG sintered body 13, and it is sufficient if P/C is equal to or greater than the above lower limit or within the above range in at least one of those cut surfaces.

In addition, in at least one of the above cut surfaces, a ratio (h/C) of a distance h between a midpoint MP of a line segment LS connecting the end points E1 and E2 and the center point CP to the straight-line distance C is preferably 0.050 or more, and more preferably 0.080 or more. The advantage of a large ratio (h/C) of the distance h to the straight-line distance C is the same as the above-mentioned advantage when the ratio (P/C) of the length P of the arc VA to the straight-line distance C is large. The ratio (h/C) of the distance h to the straight-line distance C may be, for example, 0.200 or less, and particularly 0.180 or less.

### (Manufacturing Method)

The above-described YAG sintered body can be produced by performing a raw material preparation step, a molding step, and a sintering step in this order.

In the raw material preparation step, a first powder and a second powder are prepared. Each of the first powder and the second powder contains an yttrium oxide powder containing Y₂O₃ or the like and an aluminum oxide powder containing Al₂O₃ powder or the like. The YAG sintered body to be produced here has the first sintered part and the second sintered part bonded to each other, as described above, and the first sintered part contains a dopant not contained in the second sintered part. The first powder and the second powder correspond to the compositions of the first sintered part and the second sintered part, respectively.

More specifically, the first powder further contains, in addition to the yttrium oxide powder and the aluminum oxide powder, one or more dopant oxide powders not contained in the second powder. The second powder may not contain a dopant oxide powder and may consist of an yttrium oxide powder and an aluminum oxide powder. Alternatively, the second powder may further contain one or more dopant oxide powders in addition to the yttrium oxide powder and the aluminum oxide powder. In this case, a dopant oxide powder other than the dopant oxide powder contained in the second powder is contained in the first powder.

The dopant oxide powder may include, for example, an oxide of a rare earth element (that is, at least one element selected from 16 elements consisting of Sc, La, Ce, Pr, Nd, Pm, Sm, Eu, Gd, Tb, Dy, Ho, Er, Tm, Yb, and Lu). The dopant oxide powder contained in the first powder may include such an oxide powder of a rare earth element.

Typically, the dopant oxide powder contained in the first powder may include an oxide of Nd such as Nd₂O₃ and/or an oxide of Yb such as Yb₂O₃. Furthermore, the dopant oxide powder contained in the second powder may include an oxide of Sm such as Sm₂O and/or an oxide of Cr such as Cr₂O₃.

In order to produce the first powder and the second powder as the raw material powders, for example, for each of the first powder and the second powder, the above yttrium oxide powder and aluminum oxide powder, and if necessary, a predetermined dopant oxide powder, are placed in a mixing pulverizer together with a medium such as alumina and a solvent such as water, and wet-mixed while being pulverized. A dispersant may be added in order to suppress aggregation of the raw material powder and mix it uniformly. Furthermore, Si or MgO as a sintering aid may be added. The mixing time may be, for example, 4 hours to 6 hours. After mixing is completed, the slurry taken out of the mixing pulverizer can be dried by spray drying or the like. In this way, each raw material powder of the first powder and the second powder is obtained. Note that although the case of wet mixing has been described here, dry mixing may also be used.

Either one of the first powder and the second powder may be subjected to a preliminary molding step into a solid cylindrical, hollow cylindrical, or other shape as necessary, prior to a molding step described later. In the preliminary molding step, a pressure is applied to either the first powder or the second powder, and preliminary molding is performed so as to form a predetermined shape. For example, when producing the YAG sintered body 13 shown in Fig. 4, the preliminary molding step may be performed only on the first powder so that it becomes a solid cylindrical shape, but it is not limited thereto.

The pressure applied to the first powder or the second powder in the preliminary molding step is made smaller than the pressure applied to the first powder and the second powder in the molding step described later, and specifically is preferably set to 2/3 or less of the magnitude of the pressure in the molding step. As a result, when a pressing force is applied to the first powder and the second powder in the molding step, one of the powders among the first powder and the second powder subjected to the preliminary molding step may bulge to the other powder side. As a result, as described above, the YAG sintered body may have a shape in which either the first sintered part or the second sintered part bulges toward the other side.

Thereafter, the powders are subjected to a molding step as shown in Fig. 2. In the molding step, molding is performed by applying a pressure in a state where the first powder and the second powder are arranged in a mold 51 so as to contact each other at an interface. Thereby, a molded body 3 having a first molded part 1 and a second molded part 2 bonded to each other is obtained.

As an example shown in Fig. 2, the second powder is arranged in a hollow cylindrical shape so as to surround the periphery of the central solid cylindrical first powder. Then, in this state, when uniaxial compression is performed by applying a load from above the first powder and the second powder as indicated by an arrow in the figure, the first powder and the second powder respectively become the solid cylindrical first molded part 1 and the second molded part 2 surrounding the periphery thereof, and the first molded part 1 and the second molded part 2 are bonded to each other at their respective outer surfaces and inner surfaces. In the illustrated molded body 3, the first molded part 1 has a solid cylindrical shape positioned inside the hollow cylindrical second molded part 2. However, the arrangement shape of the first powder and the second powder may be appropriately changed depending on the shape of the YAG sintered body to be produced.

Uniaxial compression, cold isostatic pressing (CIP), or the like can be adopted as a molding method in the molding step. In some cases, uniaxial compression may be performed followed by further cold isostatic pressing. The applied pressure and pressurization time applied to the first powder and the second powder can be set appropriately in consideration of various conditions.

After the molding step, the above molded body 3 is heated in a sintering step to sinter the first molded part 1 and the second molded part 2 included in the molded body 3, respectively. As a result, as shown in Figs. 3 and 4, the first molded part 1 of the molded body 3 becomes a first sintered part 11, and the second molded part 2 becomes a second sintered part 12, to obtain a YAG sintered body 13 having the first sintered part 11 and the second sintered part 12 bonded to each other.

In the sintering step, it is preferable to heat the molded body 3 to a temperature of 1600°C to 1900°C for 5 hours to 30 hours. If the heating temperature is too low or the heating time is too short, there is a concern that the density will not rise sufficiently. On the other hand, if the heating temperature is too high or the heating time is too long, the light transmittance may decrease.

In the above description, powder sintering bonding is performed on the first powder and the second powder. The powder sintering bonding is a method of compacting unsintered first and second powders together and then sintering them to join them. When powder sintering bonding is performed, the dopant of either the first powder or the second powder is mixed with the other in advance, which increases the average diffusion distance of the dopant. When the YAG sintered body 13 is produced in this manner, it is considered that a high mechanical strength is obtained at the bonded portion between the first sintered part 11 and the second sintered part 12, making it possible to use the YAG sintered body 13 in a high-load environment. Moreover, in this embodiment, highly accurate polishing of the bonding surfaces becomes unnecessary compared to a case where a first sintered part and a second sintered part prepared separately are bonded to each other. This makes it possible to reduce man-hours and costs.

### [Examples]

Next, the above-described YAG sintered body was produced as a trial, and its effects were confirmed. The details will be described below. However, the description here is merely for illustration purposes and is not intended to be limiting.

### <Test Example 1>

### (Examples 1 to 3)

Powder sintering bonding was performed on predetermined raw material powders to produce YAG sintered bodies in each of which a solid cylindrical first sintered part and a solid cylindrical second sintered part, both having a diameter of 1 inch and a thickness of 14 mm, were bonded at their bottom surfaces.

As the raw material powders, a first powder and a second powder each containing a Y₂O₃ powder, an Al₂O₃ powder, and a predetermined dopant oxide powder were prepared. For each of Examples 1 to 3, the first powder and the second powder were configured to contain a predetermined dopant oxide powder so as to achieve the dopant species and added amounts shown in Table 1.

After performing preliminary molding on the above first powder in advance, cold pressing was performed with the first powder and the second powder arranged in a state of being in contact with each other at the interface in a mold, and then CIP molding was performed at 176 MPa. Thus, a molded body having a first molded part and a second molded part bonded to each other was obtained.

Next, the above molded body was heated at a temperature of 1750°C for 20 hours to produce a YAG sintered body having a solid cylindrical first sintered part and a hollow cylindrical second sintered part on the outer periphery side that were bonded to each other.

### (Example 4)

Essentially the same procedures as in Examples 1 to 3 were followed, except that a cylindrical YAG sintered body having a solid cylindrical first sintered part and a hollow cylindrical second sintered part bonded around the first sintered part as shown in Figs. 3 and 4 was produced by powder sintering bonding. The outer diameter of the second sintered part was 4 inches, the diameter of the first sintered part was 2 inches, and the thicknesses of the first sintered part and the second sintered part were 10 mm.

### (Example 5)

Essentially the same procedures as in Examples 1 to 3 were followed, except that a cylindrical YAG sintered body having a solid cylindrical first sintered part and a hollow cylindrical second sintered part bonded around the first sintered part as shown in Figs. 3 and 4 was produced by powder sintering bonding. The outer diameter of the second sintered part was 60 mm, the diameter of the first sintered part was 30 mm, and the thicknesses of the first sintered part and the second sintered part were 10 mm.

### (Example 6)

Essentially the same procedures as in Examples 1 to 3 were followed, except that a cylindrical YAG sintered body having a solid cylindrical first sintered part and a hollow cylindrical second sintered part bonded around the first sintered part as shown in Figs. 3 and 4 was produced by powder sintering bonding. The outer diameter of the second sintered part was 100 mm, the diameter of the first sintered part was 70 mm, and the thicknesses of the first sintered part and the second sintered part were 10 mm.

### (Example 7)

Essentially the same procedures as in Examples 1 to 3 were followed, except that a YAG sintered body in which the first sintered part was a rectangular parallelepiped and a rectangular tubular second sintered part was bonded around the first sintered part was produced by powder sintering bonding. The vertical and horizontal lengths of the outer periphery of the second sintered part were 140 mm each, the vertical and horizontal lengths of the outer periphery of the first sintered part were 110 mm each, and the thicknesses of the first sintered part and the second sintered part were 10 mm.

### (Comparative Examples 1 to 3)

In Comparative Examples 1 to 3, a Y₂O₃ powder, an Al₂O₃ powder, and a predetermined dopant oxide powder were prepared so as to have the same dopant species and added amounts as those in Examples 1 to 3, respectively.

For each of the first powder and the second powder, cold pressing was performed separately, and then CIP molding was performed at 176 MPa. This yielded a first molded part and a second molded part which were not bonded to each other. Thereafter, the first molded part and the second molded part were separately heated at a temperature of 1750°C for 20 hours to produce a separate and independent first sintered part and second sintered part. Both the first sintered part and the second sintered part had a quadrangular prism shape with a length of 10 mm, a width of 15 mm, and a thickness of 10 mm.

Then, after polishing the bonding surfaces (bottom surfaces) to be bonded of each of the first sintered part and the second sintered part, the first sintered part and the second sintered part were heated at a temperature of 1100°C for 30 minutes under the action of a pressing force of 70 kgf/cm² in a state of being in contact with each other at the bonding surfaces, and sintering was performed while bonding them to each other at the bonding surfaces. Thus, a YAG sintered body in which the first sintered part and the second sintered part were bonded was obtained. The process of obtaining the first sintered part and the second sintered part in this manner and then bonding them to each other is referred to as diffusion bonding here.

### (Comparative Example 4)

A YAG sintered body was produced in substantially the same manner as in Comparative Examples 1 to 3, except that the shape of the YAG sintered body was a quadrangular prism shape with a length of 19 mm, a width of 15 mm, and a thickness of 10 mm.

### (Evaluation)

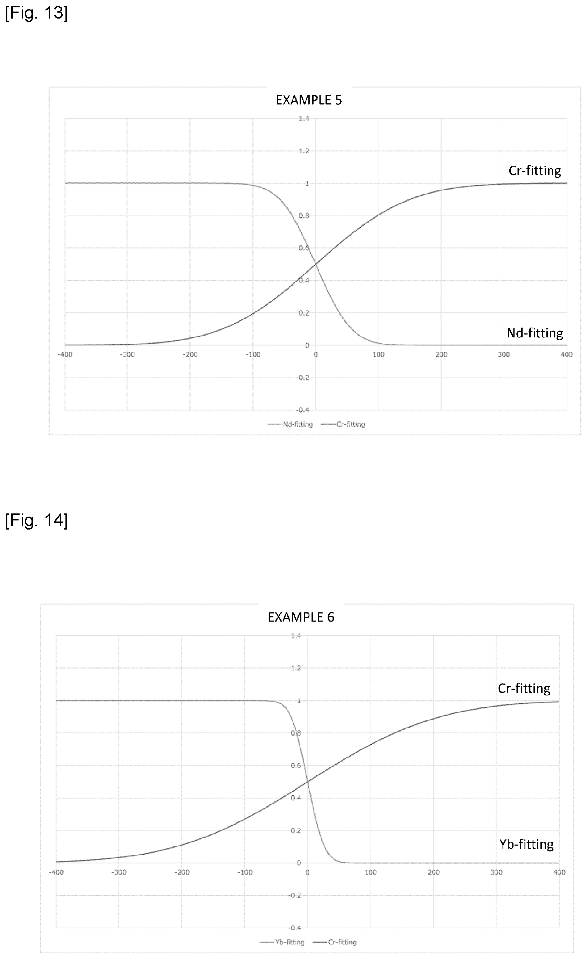

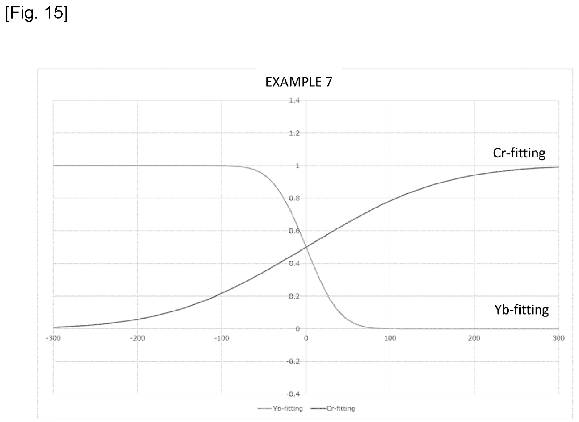

For the YAG sintered bodies produced as described above, a test for performing line analysis of the element intensity along the direction perpendicular to the bonding interface on the surface and measuring the bending strength was conducted as described earlier. The fitting results of the line analysis of Example 1 and Comparative Example 1, Example 2 and Comparative Example 2, Example 3 and Comparative Example 3, and Example 4 and Comparative Example 4 are shown in Figs. 5 to 8, respectively. The fitting results of the line analysis of Examples 5 to 7 are shown in Figs. 13 to 15, respectively. Fig. 5 also shows the line analysis results. As seen in Fig. 5, the fitting curve generally matches the line analysis results, indicating that good fitting is possible by the aforementioned method. In addition, the average diffusion distances of the dopants in the YAG sintered bodies are shown in Table 1.

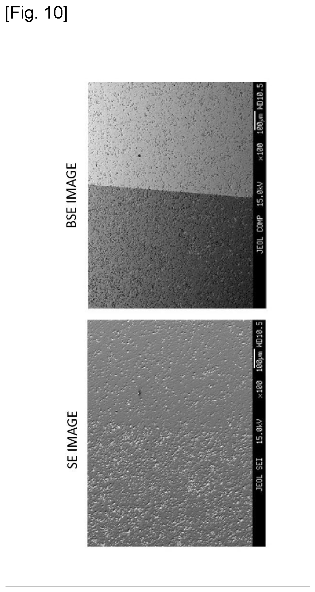

For reference, secondary electron (SE) images and backscattered electron (BSE) images obtained by a scanning electron microscope (SEM) for the bonding interface on the surface of each YAG sintered body of Example 1 and Comparative Example 1 are shown in Figs. 9 and 10, respectively. In Comparative Example 1, as shown in Fig. 10, the bonding interface can be clearly confirmed in the BSE image, whereas in Example 1, as shown in Fig. 9, the bonding interface is blurred in the BSE image, confirming a significant difference at the bonding interface.

In addition, the bending strength of each of the YAG sintered bodies of Example 4 and Comparative Example 4 was measured. In the test for measuring the bending strength, a fixed-type 4-point bending fixture (upper and lower support roller radii of 3 mm, upper support span of 10 mm, lower support span of 30 mm) was used as a support, and an INSTRON Model 5988 400 kN testing machine (using a 5 kN load cell) was used as a testing apparatus. The test speed was 0.5 mm/min (crosshead speed control). The measurement was performed on 15 samples taken from each YAG sintered body. As a result, in the YAG sintered body of Comparative Example 4, the measured values of the 15 samples were their average value (215 MPa) ± 149 MPa, whereas in the YAG sintered body of Example 4, the measured values of the 15 samples were its average value (340 MPa) ± 28 MPa, and the variation in bending strength was small. From this, it can be seen that when powder sintering bonding is performed, it is easier to obtain a YAG sintered body having uniform mechanical strength over the entire bonding surface, as compared with the case where diffusion bonding is performed.

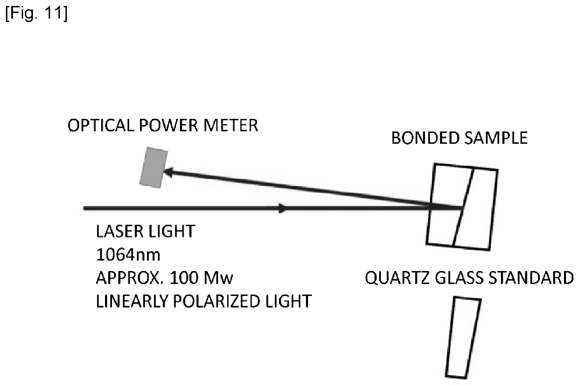

Furthermore, the reflectance of each YAG sintered body of Example 1 and Comparative Example 1 was measured. Specifically, as shown in Fig. 11, the bonded sample of the YAG sintered body was irradiated with laser light (650 nm, about 5 mW, linearly polarized light), and the intensity of the reflected light at the bonding interface of the bonded sample was measured by an optical power meter (S130C produced by Thorlabs). The intensity of the reflected light when reflected by quartz glass under the same conditions was taken as a standard, and the percentage with respect to that was defined as the reflectance (%). As a result, the reflectance was 0.035% for the YAG sintered body of Comparative Example 1, whereas it was sufficiently low at 0.002% or less for the YAG sintered body of Example 1. Therefore, if the YAG sintered body is produced by powder sintering bonding, it is considered that the reflectance at the bonding interface can be reduced more than when it is produced by diffusion bonding.

| | Dopant type and added amount | | Bonding method | Shape | Average diffusion distance [um] | | Graph | Bending strength Average value and variation [Mpa] | Reflectance [%] | SE image BSE image |
|---|---|---|---|---|---|---|---|---|---|---|
| | First sintered part | Second sintered part | | | First sintered part dopant | Second sintered part dopant | | | | |
| Example 1 | Nd: 1at% | Sm 5at% | Powder sintering bondina | 1inch- 14 | 75.5 | 55.1 | Fig. 5 upper part | - | 0.002 or less | Fig. 9 |
| Example 2 | Yb: 3at% | Cr: **0.25at%** | Powder sintering bonding | 1inch-14 | 11.8 | 81.2 | Fig. 6 upper part | - | - | - |
| Example 3 | Yb: 1at% | Sm: 0.5at% | Powder sintering bonding | 1inch-14 | 20 | 35.1 | Fig. 7 upper part | - | - | - |
| Example 4 | Nd: 1.5at% | Sm: 7.5at% | Powder sintering bonding | 2/4inch-t10 | 119.5 | 83.3 | Fig. 8 upper part | 340±28 | - | - |
| Example 5 | Nd: 0.5at% | Cr: 0.25at% | Powder sintering bonding | 30mm/60mm-t10 | 63.6 | 165.1 | Fig. 13 | - | - | - |
| Example 6 | Yb: 0.4at% | Cr: 0.25at% | Powder sintering bonding | 70mm/100mm-t10 | 29.7 | 231.8 | Fig. 14 | - | - | - |
| Example 7 | **Yb:** 1at% | Cr: 0.25at% | Powder sintering bonding | 110mm/140mm-t10 | 44.3 | 231.8 | Fig. 15 | - | - | - |
| Comparative Example 1 | Nd: 1at% | Sm: 5at% | Diffusion bonding | 10*15-t20 | 1.3 | 1.3 | Fig. 5 lower part | - | 0.035 | Fig. 10 |
| Comparative Example 2 | Yb: 3at% | Cr: 0.25at% | Diffusion bonding | 10*15-t20 | 1.3 | 0.6 | Fig. 6 lower part | - | - | - |
| Comparative Example 3 | Yb: 1at% | Sm: 0.5at% | Diffusion bonding | 10*15-t20 | 3.6 | 3.5 | Fig. 7 lower part | - | - | - |
| Comparative Example 4 | Nd 1.5at% | Sm: 7.5at% | Diffusion bonding | 10*15-t38 | 4.8 | 4.9 | Fig. 8 lower part | 215±149 | - | - |

### <Test Example 2>

In Examples 1 to 4 of Test Example 2, a cylindrical YAG sintered body having a solid cylindrical first sintered part and a hollow cylindrical second sintered part bonded around the first sintered part was produced in almost the same manner as in Example 4 of Test Example 1 described above, except for the dopant species and their added amounts. In Examples 5 to 7 of Test Example 2, YAG sintered bodies in which the second sintered part was bonded around the first sintered part were produced in the same manner as in Examples 5 to 7 of Test Example 1 described above, respectively. Here, the applied pressure exerted on the first powder at the time of preliminary molding was set to 2/3 or less of the applied pressure exerted at the time of subsequent molding in Examples 1 to 3 and 5 to 7, and set to greater than 2/3 in Example 4.

Since all of the YAG sintered bodies obtained in Examples 1 to 4 were produced in substantially the same manner as in Example 4 of Test Example 1, it is presumed that the average diffusion distance of the dopant in the first sintered part and the average diffusion distance of the dopant in the second sintered part are similarly longer than 0.010 mm. Furthermore, since all of the YAG sintered bodies obtained in Examples 5 to 7 were produced in the same manner as in Examples 5 to 7 of Test Example 1, respectively, it is presumed that the average diffusion distance of the dopant in the first sintered part and the average diffusion distance of the dopant in the second sintered part are similarly longer than 0.010 mm.

For each YAG sintered body of Examples 1 to 7, the above-mentioned ratio (P/C) of the length P of the arc VA to the straight-line distance C and the ratio (h/C) of the distance h between the center point CP and the midpoint MP of both end points E1 and E2 to the straight-line distance C were measured. Furthermore, the presence or absence of cracks at the bonding interface of each YAG sintered body was checked. The results are shown in Table 2.

As shown in Table 2, in Examples 1 to 3 and 5 to 7, setting the preliminary molding applied pressure to 2/3 or less of the molding applied pressure increased P/C and h/C, whereas in Example 4, setting the preliminary molding applied pressure to more than 2/3 of the molding applied pressure decreased P/C and h/C. Moreover, the YAG sintered bodies of Examples 1 to 3 and 5 to 7 sufficiently suppressed the generation of cracks at the bonding interface as compared with the YAG sintered body of Example 4.

| | Dopant type and added amount | | Bonding method | Shape | Ratio of preliminary molding applied pressure to molding applied pressure | P/C | h/C | Presence or absence of cracks |
|---|---|---|---|---|---|---|---|---|
| | First sintered part | Second sintered part | | | | | | |
| Example 1 | Nd: 1.5at% | Sm: 7.5at% | Powder sintering bonding | 2/4inch-t10 | 2/3 or less | 1.0244 | 0.094 | None |
| Example 2 | Yb: 1 at% | Cr: 0.25at% | Powder sintering bonding | 2/4inch-t10 | 2/3 or less | 1.0876 | 0.176 | None |
| Example 3 | Nd: 0.4at% | Sm: 0.5at% | Powder sintering bonding | 2/4inch-t10 | **2/3 or less** | 1.0391 | 0.124 | None |
| Example 4 | Nd: 0.4at% | Sm: 7.5at% | Powder sintering bonding | 2/4inch-t10 | More than 2/3 | 1.0042 | 0.040 | Cracks |
| Example 5 | Nd: 0.5at% | Cr: 0.25at% | Powder sintering bonding | 30mm/60mm-t10 | 2/3 or less | 1.0052 | 0.071 | None |
| Example 6 | Yb: 0.4at% | Cr: 0.25at% | Powder sintering bonding | 70mm/100mm-t10 | 2/3 or less | 1.0655 | 0.151 | None |
| Example 7 | Yb: 1at% | Cr: 0.25at% | Powder sintering bonding | 110mm/140mm-t10 | 2/3 or less | 1.0730 | 0.162 | None |

As described above, according to the above-described YAG sintered body and the method for producing a YAG sintered body, it was suggested that a relatively low reflectance and/or uniform mechanical strength can be achieved at the bonding interface between the first sintered part and the second sintered part.

### [Reference Signs List]

1 First molded part
2 Second molded part
3 Molded body
11 First sintered part
12 Second sintered part
13 YAG sintered body
51 Mold
L Average diffusion distance
Pi Bonding interface position
Ps1, Ps2 Reference positions

## Claims

1. A YAG sintered body including a portion in which a part of Y₃Al₅O₁₂ crystals is replaced by a dopant, comprising:
a first sintered part and a second sintered part bonded to each other, wherein the first sintered part contains a dopant not contained in the second sintered part, and
on a surface of the YAG sintered body, an average diffusion distance of at least one kind of the dopant contained in the first sintered part into the second sintered part in a direction orthogonal to a bonding interface between the first sintered part and the second sintered part is longer than 0.010 mm.

2. The YAG sintered body according to claim 1, wherein the first sintered part contains a rare earth element as the dopant.

3. The YAG sintered body according to claim 2, wherein the first sintered part contains Nd and/or Yb as the dopant, and the second sintered part contains Sm and/or Cr as the dopant, or does not have the portion replaced by the dopant.

4. The YAG sintered body according to claim 1 or 2, wherein the first sintered part has a solid cylindrical shape, and the second sintered part has a hollow cylindrical shape surrounding a periphery of the first sintered part and bonded to the first sintered part.

5. The YAG sintered body according to claim 1 or 2, wherein:
in a cut surface obtained by cutting in a thickness direction from one surface, on which the bonding interface between the first sintered part and the second sintered part is exposed, to the other surface on the back side thereof, the bonding interface has a shape that bulges toward the first sintered part side or the second sintered part side at a central portion more than at both end points in the thickness direction of the bonding interface, and
in the cut surface, a ratio (h/C) of a distance h between a midpoint of a line segment connecting both end points of the bonding interface and a center point on a thickness center position of the bonding interface to a straight-line distance C between both end points of the bonding interface is 0.050 or more.

6. A method for producing a YAG sintered body including a portion in which a part of Y₃Al₅O₁₂ crystals is replaced by a dopant,
the YAG sintered body having a first sintered part and a second sintered part bonded to each other, the first sintered part containing a dopant not contained in the second sintered part,
the method comprising:
a raw material preparation step of preparing a first powder and a second powder respectively containing an yttrium oxide powder and an aluminum oxide powder as raw material powders, wherein the first powder contains a dopant oxide powder not contained in the second powder;
a molding step of molding the first powder and the second powder by pressing them in a state where they are arranged in contact with each other at an interface, to obtain a molded body having a first molded part of the first powder and a second molded part of the second powder bonded to each other; and
a sintering step of heating and sintering the molded body.

7. The method for producing a YAG sintered body according to claim 6, wherein the dopant oxide powder of the first powder includes a rare earth element oxide powder.

8. The method for producing a YAG sintered body according to claim 7, wherein the dopant oxide powder of the first powder contains an oxide of Nd and/or an oxide of Yb, and the dopant oxide powder of the second powder contains an oxide of Sm and/or an oxide of Cr, or the second powder does not contain a dopant oxide powder.

9. The method for producing a YAG sintered body according to claim 6 or 7, wherein, in the sintering step, the molded body is heated to a temperature of 1600°C to 1900°C for 5 hours to 30 hours.

10. The method for producing a YAG sintered body according to claim 6 or 7, wherein, in the molding step, the first powder is arranged in a solid cylindrical shape, and the second powder is arranged in a hollow cylindrical shape so as to surround a periphery of the first powder.

11. The method for producing a YAG sintered body according to claim 6 or 7, further comprising:
a preliminary molding step of preliminarily molding the first powder or the second powder by an action of an applied pressure after the raw material preparation step and before the molding step,
wherein the applied pressure in the preliminary molding step is set to 2/3 of a magnitude of an applied pressure applied to the first powder and the second powder in the molding step.
